# EUROPÄISCHE PATENTSCHRIFT

(11) **EP 2 850 929 B1**
(45) Veröffentlichungstag und Bekanntmachung des Hinweises auf die Patenterteilung: **16.08.2017**
(21) Anmeldenummer: 14003224.4
(22) Anmeldetag: 17.09.2014
(51) Int. Cl.: A01C 23/04, A01C 23/00, A01B 69/04, A01B 79/00

(54) **Verfahren zum Verteilen von Gülle**
Method for distributing slurry
Procédé d'épandage de lisier

(30) Priorität: 23.09.2013 DE 102013015643
(43) Veröffentlichungstag der Anmeldung: 25.03.2015
(73) Patentinhaber: CLAAS Selbstfahrende Erntemaschinen GmbH, 33428 Harsewinkel (DE)
(72) Erfinder: Richard, Christian, 33428 Harsewinkel (DE); Brunnert, Andreas, 33397 Rietberg (DE)
(74) Vertreter: Heuer, Wilhelm

(56) Entgegenhaltungen:
- WO-A1-2011/063814
- DE-A1-102005 059 003
- DE-A1-102008 027 282
- DE-A1-102010 053 331
- US-A1- 2011 220 243

## Beschreibung

Die vorliegende Erfindung betrifft ein Verfahren zum Verteilen von Gülle auf einer landwirtschaftlichen Fläche sowie Hilfsmittel zur Durchführung des Verfahrens.

Die bei Haltung von Nutztieren, insbesondere Rindern und Schweinen anfallende Gülle enthält beträchtliche Mengen an Stickstoff, Phosphor und Mineralien, die als Dünger im Pflanzenbau von Wert sind. Der Anteil dieser Pflanzennährstoffe an der Gesamtmasse der Gülle ist jedoch erheblich geringer als bei Mineraldünger, da die Gülle im Allgemeinen zumindest zu 90% aus Wasser besteht. Um eine Fläche mit Gülle zu düngen, müssen daher wesentlich größere Massen an Material bewegt werden als beim Einsatz von Mineraldünger.

Aus WO 2011/063814 A1 ist ein Routenplanungssystem für landwirtschaftliche Fahrzeuge bekannt, das beim Verteilen von Gülle auf einer landwirtschaftlichen Fläche eingesetzt werden kann, um Routen eines Ausbringfahrzeugs und eines zum Auftanken des Ausbringfahrzeugs mit Gülle eingesetzten Zubringfahrzeugs so zu planen, dass das Auftanken an einer Position erfolgen kann, die geeignet ist, das Gewicht des Zubringfahrzeugs zu tragen und dass die Route des Zubringfahrzeugs zu dieser Position über Flächen verläuft, die in der Lage sind, das Gewicht des Zubringfahrzeugs zu tragen.

Eine Aufgabe der vorliegende Erfindung ist, die Wirtschaftlichkeit des Ausbringens von Gülle auf einer landwirtschaftlichen Fläche zu verbessern.

Die Aufgabe wird gelöst durch ein Verfahren zum Ausbringen von Gülle auf einer landwirtschaftlichen Fläche, bei dem
- ein Zubringfahrzeug von einem außerhalb der Fläche positionierten Tankfahrzeug mit Gülle betankt wird,
- das Zubringfahrzeug ein Ausbringfahrzeug auf der Fläche aufsucht und
- das Ausbringfahrzeug während des Fahrens und Ausbringens von Gülle auf der Fläche von dem Zubringfahrzeug betankt wird.
Auf diese Weise kann das Ausbringfahrzeug kontinuierlich arbeiten; Unterbrechungen durch das herkömmlicherweise nötige Anfahren des Tankfahrzeugs, Auftanken und Zurückkehren an den Ort, an dem zuvor das Ausbringen abgebrochen wurde, entfallen.Da das Tankfahrzeug nahe an der Fläche positioniert werden kann, können auch die Wege, die das Zubringfahrzeug zurücklegen muss, kurz gehalten werden.

Wenn das Ausbringfahrzeug auf der Fläche eine vorgeplante Route abfährt, kann ein Treffpunkt mit dem Zubringfahrzeug, an dem mit dem Auftanken des Ausbringfahrzeugs begonnen werden kann, auf dieser Route anhand eines an Bord des Ausbringfahrzeugs vorhandenen Vorrats an Gülle festgelegt werden. Diese und eine bekannte Rate, mit der die Gülle ausgebracht wird, erlauben eine genaue Abschätzung, an welchen Punkt der Route der Güllevorrat erschöpft sein wird, sodass spätestens bei Erreichen dieses Punktes mit dem Betanken des Ausbringfahrzeugs begonnen werden sollte.

In der Praxis umfasst eine solche vorgeplante Route meist eine Vielzahl von im wesentlichen geradlinigen Routenabschnitten, in denen die Fläche hin und her abgefahren wird, jeweils getrennt durch Wendemanöver in einem Vorgewende der Fläche. Da das koordinierte Fahren von Wendemanövern des Zubringfahrzeugs und des Ausbringfahrzeugs während des Betankens des Letzteren zeitaufwendig ist und der Platz im Vorgewende für ein koordiniertes Wenden beider Fahrzeuge häufig nicht ausreicht, ist es zweckmäßig, den Treffpunkt am Beginn eines von Wendemanövern freien Abschnitts der Route zu wählen. Der Beginn eines solchen Abschnitts ist nicht notwendigerweise das Ende eines vorhergehenden Wendemanövers, der Abstand zum nächstfolgenden notwendigen Wendemanöver sollte jedoch groß genug sein, damit bis dahin das Betanken des Ausbringfahrzeugs abgeschlossen werden kann.

Es kann in einzelnen Fällen zweckmäßig sein, die Breite einer Spur, auf der die Gülle ausgebracht wird, vor Beginn eines Betankens zu verringern, um so die Wegstrecke, die das Ausbringfahrzeug vor der vollständigen Entleerung seines Tanks zurücklegen kann, zu verlängern und den Treffpunkt so platzieren zu können, dass der vom Zubringfahrzeug zurückzulegende Weg sich verkürzt. Um in einem solchen Fall dennoch die Fläche vollständig und gleichmäßig mit Gülle versorgen zu können, ist es im Falle einer Verringerung der Spurbreite zweckmäßig, die noch zu fahrende Route neu zu planen.

Die Aufgabe wird ferner gelöst durch ein Computerprogrammprodukt zur Anwendung in dem oben beschriebenen Verfahren, welches Instruktionen umfasst, die bei Ausführung auf einen Computer diesen befähigen, in Kenntnis einer vorgeplanten Route des Ausbringfahrzeugs und eines an Bord des Ausbringfahrzeugs vorhandenen Vorrats an Gülle einen Treffpunkt des Ausbringfahrzeugs mit dem Zubringfahrzeug festzulegen und eine Route des Zubringfahrzeugs zu dem Treffpunkt festzulegen.

Erfindungsgegenstand ist ferner ein Fahrzeug, insbesondere ein Ausbring- oder Zubringfahrzeug zur Anwendung in dem obigen Verfahren, mit einem Bordcomputer, der eingerichtet ist, die Instruktionen des Computerprogrammprodukts auszuführen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine erste Draufsicht auf eine landwirtschaftliche Fläche während der Durchführung des Verfahrens;
- Fig. 2: ein Blockdiagramm von Komponenten der auf der landwirtschaftlichen Fläche der Fig. 1 eingesetzten Fahrzeuge;
- Fig. 3: eine zweite Draufsicht auf die landwirtschaftliche Fläche; und
- Fig. 4: eine dritte Draufsicht auf die landwirtschaftliche Fläche während der Durchführung des Verfahrens.

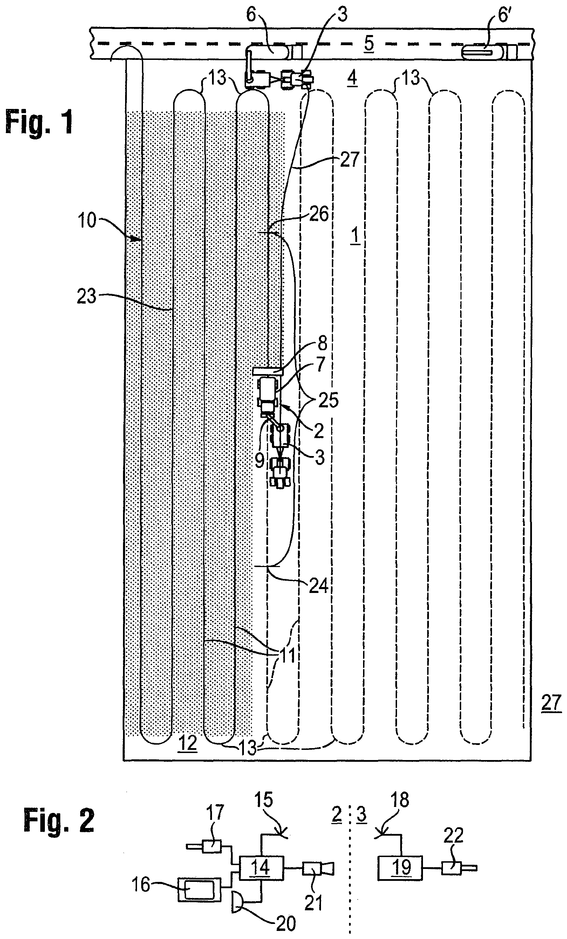

Fig. 1 zeigt in einer landkartenartigen Draufsicht eine landwirtschaftliche Fläche 1, auf der ein Ausbringfahrzeug 2 und ein Zubringfahrzeug 3 im Begriff sind, Gülle zu verteilen. Benachbart zu einem ersten Vorgewende 4 der Fläche 1 erstreckt sich eine Strasse 5, auf der sich ein mit der auszubringenden Gülle beladener Tankwagen 6 befindet.

Das Ausbringfahrzeug 2 ist hier ein Ackerschlepper mit aufgesattelten Güllefass 7 und einem am Heck montierten Verteilerwerkzeug 8 wie etwa einem Schleppschlauch oder Schleppschuh.

Ein vorn am Ausbringfahrzeug 2 montierter Schwanenhals 9 dient in an sich bekannter Weise zum Wiederauffüllen des Güllefasses 7.

Anhand bekannter Abmessungen der Fläche 1 wird vor Beginn des Ausbringens eine Route 10 berechnet, auf der das Ausbringfahrzeug 2 die Fläche 1 abfahren kann, um sie flächendeckend mit Gülle zu versorgen. Die Route 10 besteht typischerweise aus einer Vielzahl von geradlinigen Abschnitten 11, die sich zwischen dem Vorgewende 4 und einem gegenüber liegenden Vorgewende 12 erstrecken, und Wendemanövern 13 in den Vorgewenden 4, 12. Ein Teil 23 der Route 10, den das Ausbringfahrzeug 2 zum in der Fig. dargestellten Zeitpunkt bereits abgefahren hat, ist als durchgezogene Linie, ein noch nicht gefahrener Teil als gestrichelte Linie dargestellt.

Der Abstand zwischen den geradlinigen Abschnitten 11 entspricht der Breite des Verteilerwerkzeugs 8, so dass jeder Punkt der Fläche 1 zwischen den Vorgewenden 4, 12 genau einmal von dem Verteilerwerkzeug 8 überstrichen und mit Gülle beaufschlagt wird.

Die Route 10 kann im Prinzip auf einem beliebigen Computer geplant und anschließend auf einen Bordcomputer 14 (siehe Fig. 2) des Ausbringfahrzeugs 2 geladen werden, damit dieser das Abfahren der Route 10 autonom steuern oder zumindest in an sich bekannter Weise einen Fahrer des Ausbringfahrzeugs 2 beim Abfahren der Route 10 durch Ausgabe von Lenkhinweisen unterstützen kann. Bevorzugtermaßen erfolgt die Planung der Route 10 auf dem Bordcomputer 14 selbst, basierend auf hochgeladenen Angaben über die zu bearbeitende Fläche 1, da der Bordcomputer 14 besser als ein vom Einsatzort entfernter stationärer Computer in der Lage ist, auf unvorhergesehene Ereignisse während des Ausbringens der Gülle zu reagieren und gegebenenfalls die Routenplanung anzupassen.

Wie in Fig. 2 gezeigt, ist der Bordcomputer 14 mit einer Funkschnittstelle 15 verbunden, die mehreren Aufgaben dient. Zum Einen kann sie eingesetzt werden, um einen Arbeitseinsatz betreffende Daten wie etwa eine Kennung der zu bearbeitenden Fläche 1 oder Daten zu deren geografischer Lage und Abmessungen, den Nährstoffbedarf der Fläche 1 und den Nährstoffgehalt der auszubringenden Gülle von einem Hofcomputer zu empfangen. Des Weiteren dient sie zum Empfang von Satellitensignalen, insbesondere GPS-Signalen, anhand derer der Bordcomputer 14 die geografische Position des Ausbringfahrzeugs 2 ermittelt, um eventuelle Abweichungen von der geplanten Route 10 zu erkennen und mittels eines angeschlossenen Anzeigeinstruments 16 den Fahrer des Ausbringfahrzeugs 2 darauf hinzuweisen, oder um gegebenenfalls autonom über ein Stellglied 17 in die Lenkung des Ausbringfahrzeugs 2 einzugreifen und es so auf der geplanten Route 10 zu halten oder auf diese zurückzubringen. Ferner dient die Funkschnittstelle 15 der Kommunikation mit dem Zubringfahrzeug 3, das mit einer entsprechenden Funkschnittstelle 18 und einem Bordcomputer 19 ausgestattet ist.

Ein Füllstandsensor 20 ist mit dem Bordcomputer 14 des Ausbringfahrzeugs 2 verbunden, um diesen während des Ausbringens der Gülle mit Angaben zur Menge der Gülle im Güllefass 7 zu versorgen. Je geringer diese Menge ist, umso genauer kann der Bordcomputer 14 einen Punkt auf der geplanten Route 10 voraussagen, an welchem der Inhalt des Güllefasses 7 aufgebraucht sein wird.

In der Ausgestaltung der Fig. 2 ist eine Kamera 21 mit dem Bordcomputer 14 verbunden, um diesem die Erfassung der Position von Ausbring- und Zubringfahrzeug 2, 3 zueinander während eines Betankens des Ausbringfahrzeugs 2 durch das Zubringfahrzeug 3 zu ermöglichen und Steuerbefehle zu generieren, die es den Fahrzeugen 2, 3 ermöglichen, während des Fahrens auf der Fläche 1 eine zum Betanken geeignete Position zueinander einzuhalten. Da das Ausbringfahrzeug 10 nicht von der geplanten Route 10 abweichen sollte, werden diese Befehle vorzugsweise über die Funkschnittstellen 15, 18 an den Bordcomputer 19 des Zubringfahrzeugs 3 übermittelt, der basierend auf den Befehlen über ein Stellglied 22 in die Lenkung des Zubringfahrzeugs 3 eingreift. Alternativ könnte eine solche Kamera auch am Zubringfahrzeug 3 vorgesehen sein; in diesem Fall wäre es zweckmäßigerweise der Bordcomputer 19, der die zum Halten der Fahrzeuge 2, 3 in der zum Betanken geeigneten Position benötigten Steuerbefehle generiert.

Fig. 1 zeigt das Zubringfahrzeug 3 zu zwei verschiedenen Zeitpunkten, einmal während des Überladens der Gülle vom Zubringfahrzeug 3 auf das Ausbringfahrzeug 2, und einmal zu einem früheren Zeitpunkt, an dem es im Vorgewende 4 parkt, während sein Tank vom Tankwagen 6 aufgefüllt wird. Zu diesem früheren Zeitpunkt ist das Ausbringfahrzeug 2 noch auf dem als durchgezogene Linie dargestellten Teil 23 seiner Route 10 unterwegs. Während des Abfahrens des Teils 23 prognostiziert der Bordcomputer 14, dass der Inhalt des Güllefasses 7 an einem Punkt 24 der Route 10 aufgebraucht sein wird. Anhand des Fassungsvermögens des Güllefasses 7, des Durchsatzes des Schwanenhalses 9 und der Fahrgeschwindigkeit des Ausbringfahrzeugs 2 kalkuliert der Bordcomputer 14 die Länge eines Wegstücks 25, auf dem die Fahrzeuge 2, 3 koordiniert nebeneinander herfahren müssen, um ein Wiederauffüllen des Güllefasses 7 durch das Zubringfahrzeug 3 ohne Halt der Fahrzeuge 2, 3 zu ermöglichen. Das Wegstück 25 wird auf dem geradlinigen Abschnitt 11, auf der Punkt 24 liegt, so platziert, dass es den Punkt 24 einschließt.

Im hier betrachteten Fall ist der Punkt 24 als Ende des Wegstücks 25 gewählt, um die Strecke, die das Zubringfahrzeug 3 zum Betanken des Ausbringfahrzeugs 2 auf der Fläche 1 zurücklegen muss, zu minimieren.

Der Bordcomputer 14 berechnet den Anfangspunkt 26 des Wegstücks 25 und den Zeitpunkt, an dem das Ausbringfahrzeug 2 den Punkt 26 erreichen wird, und übermittelt diese über die Funkschnittstelle 15 an das Zubringfahrzeug 3. Dessen Bordcomputer 19 kann eingerichtet sein, anhand der Koordinaten des Punkts 26 und der angegebenen Zeit eine Route 27 zum Punkt 26 zu planen und das Abfahren dieser Route autonom zu steuern oder um einem Fahrer des Zubringfahrzeugs 3 die zum rechtzeitigen Abfahren der Route 27 erforderlichen Informationen zu liefern.

Während des Auftankens des Güllefasses 7 geht der Bordcomputer 19 des Zubringfahrzeugs 3 in einen ferngesteuerten Modus über, in welcher er Fahrtrichtung und Geschwindigkeit des Zubringfahrzeugs 3 anhand der oben erwähnten Steuerbefehle des Bordcomputers 14 steuert, um die beiden Fahrzeuge 2, 3 in einer Position zueinander zu halten, in welcher der Schwanenhals 9 des Ausbringfahrzeugs 2 in den Tank des Zubringfahrzeugs 3 eintauchen und dessen Inhalt absaugen kann. Nach Auffüllen des Güllefasses 7 wird der Schwanenhals 9 zurückgezogen, und das Zubringfahrzeug 3 fährt zurück ins Vorgewende 4, um vom Tankwagen 6 neu befüllt zu werden.

Dieser Vorgang kann sich während des Ausbringens der Gülle auf der Fläche 1 mehrmals wiederholen, wobei in dem Maße, wie das Ausbringfahrzeug 2 sich auf der Fläche 1 vorarbeitet, auch der Tankwagen 6 von Zeit zu Zeit vorrücken kann, z.B. an die mit 6' bezeichnete Stelle, um die Wege des Zubringfahrzeugs 3 auf der Fläche 1 kurz und die daraus resultierende Bodenverdichtung gering zu halten.

Wie in Fig. 1 gezeigten Fall ist das Breitenverhältnis der Fläche 1 und des Verteilerwerkzeugs 8 derart, dass für eine vollständige Versorgung der Fläche 1 mit Gülle eine ungerade Zahl von geradlinigen Routenabschnitten 11 erforderlich ist, sodass das Ausbringfahrzeug, wenn die Arbeit beendet ist, von einem Endpunkt 28 der Route 10 aus quer über die Fläche 1 zur Straße 5 zurückkehren muss, ohne dabei Gülle auszubringen. Außerdem kann auf dem letzten geradlinigen Abschnitt 11 der Route 10 das Verteilerwerkzeug 8 nur noch auf einem Teil seiner Breite genutzt werden.

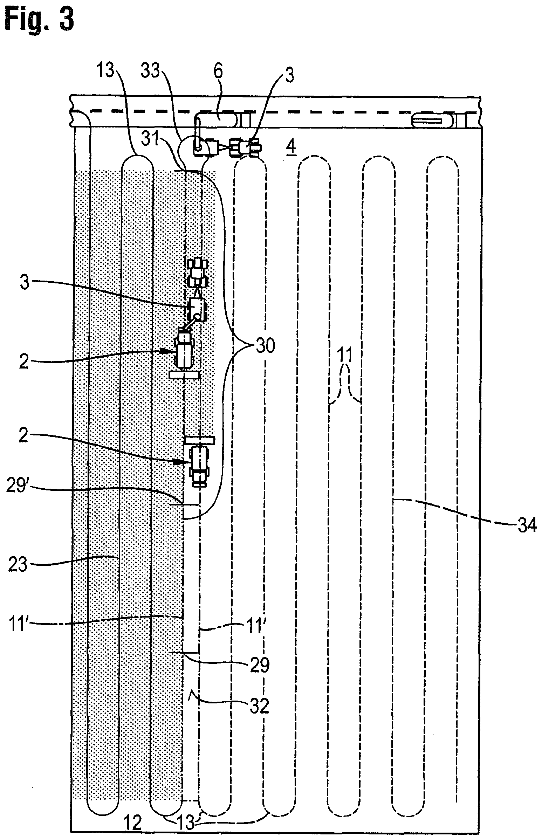

Diese Tatsache kann ausgenutzt werden, um ohne Einbuße an Effizienz im Betrieb des Ausbringfahrzeugs 2 den Fahrweg des Zubringfahrzeugs 3 zu verkürzen. Wenn z.B., wie in Fig. 3 gezeigt, der Bordcomputer 14 eine Entleerung des Güllefasses 7 an einem vom Vorgewende 4 aus für das Zubringfahrzeug 3 nur auf einem langen Wege erreichbaren Punkt 29, nahe am straßenfernen Vorgewende 12, prognostiziert, dann reduziert der Bordcomputer 14 zeitweilig den Gülleverbrauch, indem er die Breite einer Spur, auf der Gülle ausgebracht wird, zeitweilig reduziert. Im hier betrachteten Fall wird die Spurbreite auf dem geradlinigen Abschnitt 11', auf dem der prognostizierte Punkt 29 liegt, auf die Hälfte reduziert, indem nur ein linker Teil des Verteilerwerkzeugs 8 genutzt wird, wodurch sich der Ort der vollständigen Entleerung des Güllefasses 7 in Richtung des Vorgewendes 4, zu Punkt 29', verlagert. Der Auftankvorgang kann nun auf einem Wegstück 30 stattfinden, dessen Endpunkt 31 in unmittelbarer Nähe des Vorgewendes 4 liegt. Eine in Fig. 3 mit 32 bezeichnete Fläche links von dem geradlinigen Abschnitt 11' wird beim Abfahren des Abschnitts 11' also nicht mit Gülle beaufschlagt.

Nachdem sich die Fahrzeuge 2, 3 wieder voneinander getrennt haben, fährt das Ausbringfahrzeug 2 ein im vergleich zu den üblichen Wendemanövern 13 verengtes Wendemanöver 33, so dass der Abstand zwischen dem Abschnitt 11' und dem darauf folgenden geradlinigen Abschnitt 11", auf dem Gülle wieder auf der gesamten Breite des Verteilerwerkzeugs 8 ausgebracht wird, so weit verringert ist, dass die zuvor ausgesparte Fläche 32 beim Abfahren des Abschnitts 11' versorgt wird. So bleibt und eine flächendeckende Ausbringung der Gülle gewährleistet.

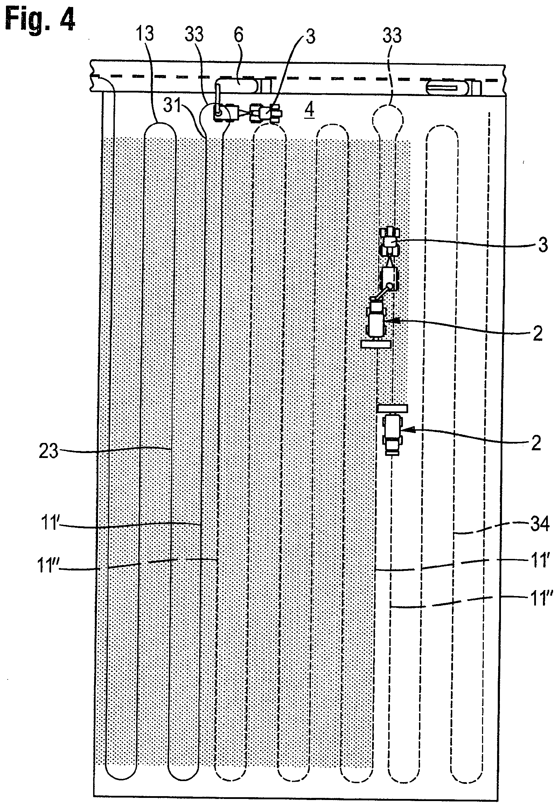

Die Verringerung der Spurbreite im Abschnitt 11' führt dazu, dass die Route im Anschluss an den Abschnitt 11' neu geplant werden muss. Die aus der Neuplanung resultierende Route 34 ist gegenüber dem noch nicht gefahrenen Teil der ursprünglichen Route 10 parallel verschoben; die Gesamtzahl der zur Versorgung der gesamten Fläche 1 zu fahrenden geradlinigen Abschnitte 11 ist jedoch unverändert. Es ist daher möglich, wie in Fig. 4 gezeigt, auf mehreren dieser Abschnitte 11 die Gülle mit reduzierter Breite auszubringen, ohne dass sich dadurch die Fahrstrecke des Ausbringfahrzeugs 2 auf der Fläche 1 nennenswert verlängert.

### Bezugszeichen

- 1: landwirtschaftliche Fläche 1
- 2: Ausbringfahrzeug
- 3: Zubringfahrzeug
- 4: Vorgewende
- 5: Strasse
- 6: Tankwagen
- 7: Güllefass
- 8: Verteilerwerkzeug
- 9: Schwanenhals
- 10: Route
- 11: geradliniger Abschnitt
- 12: Vorgewende
- 13: Wendemanöver
- 14: Bordcomputer
- 15: Funkschnittstelle
- 16: Anzeigeinstrument
- 17: Stellglied
- 18: Funkschnittstelle
- 19: Bordcomputer
- 20: Füllstandssensor
- 21: Kamera
- 22: Stellglied
- 23: Teil von 10
- 24: Punkt
- 25: Wegstück
- 26: Punkt
- 27: Route
- 28: Endpunkt
- 29: Punkt
- 30: Wegstück
- 31: Endpunkt
- 32: Fläche
- 33: Wendemanöver
- 34: Route

## Patentansprüche

1. Verfahren zum Ausbringen von Gülle auf einer landwirtschaftlichen Fläche (1), bei dem
- ein Zubringfahrzeug (3) mit Gülle betankt wird,
- das Zubringfahrzeug (3) ein Ausbringfahrzeug (2) auf der Fläche (1) aufsucht, und
- das Ausbringfahrzeug (2) von dem Zubringfahrzeug (3) betankt wird, **dadurch gekennzeichnet, dass** das Betanken des Zubringfahrzeugs (3) von einem außerhalb der Fläche (1) positionierten Tankfahrzeug (6) vorgenommen wird und das Betanken des Ausbringfahrzeugs (2) während des Fahrens und Ausbringens von Gülle auf der Fläche (1) erfolgt.

2. Verfahren nach Anspruch 1, **dadurch gekennzeichnet, dass** das Ausbringfahrzeug (2) auf der Fläche (1) eine vorgeplante Route (10) abfährt und ein Treffpunkt (26) mit dem Zubringfahrzeug (3) auf der Route (10) anhand eines an Bord des Ausbringfahrzeugs (2) vorhandenen Vorrats an Gülle festgelegt wird.

3. Verfahren nach Anspruch 2, **dadurch gekennzeichnet, dass** der Treffpunkt (26) am Beginn eines von Wendemanövern (13, 33) freien Abschnitts (25) der Route (10) gewählt wird.

4. Verfahren nach Anspruch 3, **dadurch gekennzeichnet, dass** das Betanken des Ausbringfahrzeugs (2) vollständig auf dem Abschnitt (25) durchgeführt wird.

5. Verfahren nach einem der vorhergehenden Ansprüche, bei dem die Breite einer Spur, auf der die Gülle ausgebracht wird, vor Beginn eines Betankens verringert wird.

6. Verfahren nach Anspruch 5, bei dem die Route (34) des Ausbringfahrzeugs (2) im Falle einer Verringerung der Spurbreite neu geplant wird.

7. Computerprogrammprodukt zur Anwendung in dem Verfahren nach einem der vorhergehenden Ansprüche, welches Instruktionen umfasst, die bei Ausführung auf einem Computer (14) diesen befähigen, in Kenntnis einer vorgeplanten Route (10) des Ausbringfahrzeugs (2) und eines an Bord des Ausbringfahrzeugs (2) vorhandenen Vorrats an Gülle einen Treffpunkt (26) des Ausbringfahrzeugs (2) mit dem Zubringfahrzeug (3) festzulegen und eine Route (27) des Zubringfahrzeugs (3) zum Treffpunkt (26) festzulegen.

8. Fahrzeug, insbesondere Ausbring- oder Zubringfahrzeug (2, 3) zur Anwendung in dem Verfahren nach einem der Ansprüche 1 bis 6, **gekennzeichnet durch** einen Bordcomputer (14; 19), der eingerichtet ist, die Instruktionen des Computerprogrammprodukts nach Anspruch 7 auszuführen.

## Claims

1. Method for applying liquid manure to an agricultural field (1) wherein
- a supply vehicle (3) is filled with liquid manure,
- the supply vehicle (3) seeks out an application vehicle (2) on the field (1), and
- the application vehicle (2) is filled up by the supply vehicle (3), **characterised in that** the supply vehicle (3) is filled by a tanker vehicle (6) positioned outside the field (1) and the filling of the application vehicle (2) takes place while it is in motion and applying liquid manure to the field (1).

2. Method according to claim 1, **characterised in that** the application vehicle (2) follows a pre-planned route (10) on the field (1) and a meeting point (26) with the supply vehicle (3) on the route (10) is defined on the basis of a remaining supply of liquid manure on board the application vehicle (2).

3. Method according to claim 2, **characterised in that** the meeting point (26) is selected at the beginning of a section (25) of the route (10) free of turning manoeuvres (13, 33).

4. Method according to claim 3, **characterised in that** the filling of the application vehicle (2) takes place completely on the section (25).

5. Method according to one of the preceding claims, wherein the width of a strip on which the liquid manure is applied is reduced before a filling begins.

6. Method according to claim 5, wherein the route (34) of the application vehicle (2) is re-planned in the event of a reducing the strip width.

7. Computer program product for use in the method according to one of the preceding claims which comprises instructions which, on being run on a computer (14), enable said computer, having knowledge of a previously planned route (10) of the application vehicle (2) and of a remaining supply of liquid manure on board the application vehicle (2), to define a meeting point (26) of the application vehicle (2) with the supply vehicle (3) and to define a route (27) of the supply vehicle (3) to the meeting point (26).

8. Vehicle, in particular an application or supply vehicle (2, 3) for use in the method according to one of the claims 1 to 6, **characterised by** an on-board computer (14; 19) which is configured to execute the instructions of the computer program product according to claim 7.

## Revendications

1. Procédé d'application d'engrais liquide sur un champ agricole (1) dans lequel
- un véhicule d'approvisionnement (3) est rempli d'engrais liquide,
- le véhicule d'approvisionnement (3) rejoint un véhicule d'application (2) sur le champ (1), et
- le véhicule d'application (2) est rempli par le véhicule d'approvisionnement (3), **caractérisé en ce que** le véhicule d'approvisionnement (3) est rempli par un camion-citerne (6) situé en dehors du champ (1) et le remplissage du véhicule d'application (2) se déroule pendant qu'il est en mouvement et qu'il applique l'engrais liquide sur le champ (1).

2. Procédé selon la revendication 1, **caractérisé en ce que** le véhicule d'application (2) suit une route préprogrammée (10) sur le champ (1) et un point de rencontre (26) avec le véhicule d'approvisionnement (3) sur la route (10) est défini en fonction d'un stock restant d'engrais liquide à bord du véhicule d'application (2).

3. Procédé selon la revendication 2, **caractérisé en ce que** le point de rencontre (26) est sélectionné au début d'une section (25) de la route (10) ne nécessitant pas de manoeuvres de virage (13, 33).

4. Procédé selon la revendication 3, **caractérisé en ce que** le remplissage du véhicule d'application (2) se déroule complètement sur la section (25).

5. Procédé selon l'une quelconque des revendications précédentes, dans lequel la largeur d'une planche sur laquelle l'engrais liquide est appliqué est réduite avant que commence un remplissage.

6. Procédé selon la revendication 5, dans lequel la route (34) du véhicule d'application (2) est reprogrammée en cas de rétrécissement de la largeur de planche.

7. Produit de programme informatique destiné à être utilisé dans le procédé selon l'une des revendications précédentes qui comprend des instructions qui, à leur exécution sur un ordinateur (14), permettent audit ordinateur, informé d'une route programmée précédemment (10) du véhicule d'application (2) et d'un stock restant d'engrais liquide à bord du véhicule d'application (2), de définir un point de rencontre (26) du véhicule d'application (2) avec le véhicule d'approvisionnement (3) et de définir une route (27) du véhicule d'approvisionnement (3) jusqu'au point de rencontre (26).

8. Véhicule, en particulier un véhicule d'application ou d'approvisionnement (2, 3) destiné à être utilisé dans le procédé selon l'une des revendications 1 à 6, **caractérisé par** un ordinateur embarqué (14 ; 19) configuré pour exécuter les instructions du produit de programme informatique selon la revendication 7.
